# EUROPÄISCHE PATENTSCHRIFT

(11) **EP 2 173 501 B1**
(45) Veröffentlichungstag und Bekanntmachung des Hinweises auf die Patenterteilung: **31.08.2011**
(21) Anmeldenummer: 09713106.4
(22) Anmeldetag: 16.01.2009
(51) Int. Cl.: B21C 37/087, B21C 37/22, B23K 1/00, B23K 1/20, F28D 1/03, F28F 3/02

(54) **Verfahren zur Herstellung eines Flachrohres**
Method for the production of a flat tube
Procédé de fabrication d'un tube plat

(30) Priorität: 20.02.2008 DE 102008010187
(43) Veröffentlichungstag der Anmeldung: 14.04.2010
(73) Patentinhaber: Modine Manufacturing Company, Racine, Wisconsin 53403-2552 (US)
(72) Erfinder: DAUT, Ingo, 72644 Oberboihingen (DE)
(74) Vertreter: Wolter, Klaus-Dietrich
(86) Internationale Anmeldenummer: PCT/EP2009/000233
(87) Internationale Veröffentlichungsnummer: WO 2009/103385

(56) Entgegenhaltungen:
- WO-A-2007/031306
- DE-A1- 19 645 928
- DE-A1- 19 927 607
- GB-A- 782 631
- JP-A- 5 115 934

## Beschreibung

Die Erfindung betrifft ein Verfahren zur Herstellung von Flachrohren für Wärmetauscher, mit den Merkmalen des Oberbegriffes des Anspruchs 1.
Der Wärmetauscher aus der DE 199 27 607A1 ist speziell als Ladeluftkühler ausgebildet worden und besteht deshalb aus Aluminiumblechen. Die Enden der Flachrohre wurden aufgeweitet, wobei die aufgeweiteten Enden in einem Stapel aus Flachrohren eng aneinander anliegen. Wegen der aneinander anliegenden, endseitigen Aufweitungen ergeben sich in vorteilhafter Weise auch Kanäle zwischen den Flachrohren, durch die ein Kühlmittel strömen kann. Demzufolge wird in der Veröffentlichung vorgesehen, auf den Einsatz von Rohrböden zu verzichten. Die Aufweitungen der Flachrohrenden sind unmittelbar verbunden sind und um den endseitigen Umfang des Stapels ist ein Luftkasten angeordnet. Die Aufweitungen weisen den positiven Nebeneffekt auf, dass das Einführen der Inneneinsätze in die Flachrohre leichter zu bewerkstelligen ist, da dieselben als Einführschrägen dienen. Allerdings wird die Herstellung der mit den Aufweitungen versehenen Fiachrohre als sehr kostenträchtig angesehen. Darüber hinaus kommt es zu löttechnischen Problemen sowohl bei der dichten Verbindung der Aufweitungen der Flachrohrenden untereinander als auch bei der Verbindung des Kastens mit dem erwähnten Umfang des Stapels aus Flachrohren. Ferner führen Aufweitungen oft zu einer gewissen Wanddickenreduktion, verbunden mit der Gefahr des Einreißens der Wand. Deshalb kann man nicht solche geringen Wand - bzw. Blechdicken einsetzen wie es aus Gewichts - und Kostengründen eigentlich wünschenswert wäre.
Flachrohre mit endseitigen Aufweitungen als Einführschrägen und ein Wärmeübertrager ähnlichen Typs sind auch aus der WO 2007/031 306A1 bekannt. Der Oberbegriff des Anspruchs 1 basiert auf diesem Dokument. Der Wärmeübertrager besitzt allerdings, trotz der erwähnten endseitigen Aufweitungen, zusätzlich noch Rohrböden mit Öffnungen zur Aufnahme der Rohrenden.
Bei anderen bekannten Lösungen, die auf die Aufweitung der Flachrohrenden bzw. auf Einführschrägen verzichten, wird das Flachrohr gewöhnlich auf einer Walzenstraße oder dergleichen endlos vom Band hergestellt und auf Länge zugeschnitten. Das Flachrohr wird dann im elastischen Bereich verformt, das heißt, in Richtung eines leicht elliptischen Querschnittes gebracht, um die Einführung des Inneneinsatzes zu erleichtern. Die Toleranzen der Inneneinsätze und der Flachrohre müssen wegen der späteren Verlötung sehr eng beieinander liegen, was die Schwierigkeiten vergröβert. Solche Lösungen sind oft ebenfalls nicht qualitätsgerecht, weil sich die Wand der Flachrohre nach dem Einfügen der Inneneinsätze von selbst nicht wieder satt an die Inneneinsätze anschmiegt. Um qualitätsgerechte Verlötungen zu erzielen, muss die Wand flächig an die Inneneinsätze gedrückt werden, wobei sich die Schmalseiten der Flachrohre undefiniert verformen können, was später zu weiteren Problemen bei der löttechnischen Verbindung der Flachrohrenden in Öffnungen eines Rohrbodens führt.
Die möglicherweise perfekteste bekannte Methode zur Herstellung von Flachrohren mit Inneneinsätzen aus Bandmaterial zeichnet sich dadurch aus, dass sowohl das Flachrohr als auch der Inneneinsatz auf einer Walzenstraße oder dergleichen von endlosen Bändern hergestellt werden. Dabei wird im Zuge der Bandumformung zur Flachrohrform der bereits umgeformte Inneneinsatz in das Flachrohr eingefädelt, und die Flachrohrumformung wird abgeschlossen. Somit entfällt bei dieser Methode das Einführen einzelner Inneneinsätze in einzelne Flachrohre vollständig. Einige Schwierigkeiten gibt es hierbei jedoch beim sauberen Abtrennen einzelner Flachrohre samt inneneinsatz vom endiosen Fiachrohr. Die immensen investitionskosten für die ümsetzung dieser Methode stehen ihrer Wirtschaftlichkeit dann entgegen, wenn der Bedarf eine umfangreiche Massenproduktion von Flachrohren gleicher Abmessung nicht zulässt. Als Beispiel für diese bekannte Methode kann auf die JP 05 - 115934A verwiesen werden.
Zur Herstellung von Flachrohen für Wärmetauscher ist es schließlich auch noch bekannt, Platinen auszustanzen, dieselben zum Flachrohr umzuformen und in einer Längsnaht zu schweißen. (siehe DE 19 645 928A) Auch in so hergestellte Flachrohre können die Inneneinsätze eingeführt werden, was jedoch mit den oben beschriebenen Schwierigkeiten verbunden ist.

Die Aufgabe der Erfindung besteht darin, die zuletzt skizzierte Art der Herstellung von Flachrohren derart weiter zu entwickeln, dass auf die beschriebene kostenträchtige Aufweitung der Flachrohrenden verzichtet werden kann, ohne das Einführen der Inneneinsätze wesentlich zu erschweren.
Diese Aufgabe wird erfindungsgemäß mittels eines Herstellungsverfahrens gelöst, das die Merkmale des Anspruchs 1 aufweist.
Gemäß dem erfindungsgemäßen Verfahren ist vorgesehen, dass an wenigstens einem Flachrohrende zwei Vorsprünge erzeugt werden und dass die Vorsprünge nach außen abgebogen werden.
Weil die Wand des Flachrohrs als Platine bevorzugt mit wenigstens zwei Vorsprüngen bereitgestellt wird, weil die Platine derart zum Flachrohr umgeformt wird, dass die Vorsprünge wenigstens Teile der Breitseiten oder Schmalseiten wenigstens eines Flachrohrendes bilden, weil die Vorsprünge zur Bildung von Einführschrägen abgebogen werden, und die Inneneinsätze in das Flachrohr eingefügt werden, kann ohne das Vorsehen von Aufweitungen das Einführen der Inneneinsätze vorgenommen werden. Die abgebogenen Vorsprünge übernehmen die Funktion von Einführschrägen. Da die Vorsprünge nach dem Einschieben abgetrennt werden, können die Flachrohrenden in Öffnungen von Rohrböden eingesteckt und mit wesentlich höherer Prozesssicherheit dicht verbunden werden. Hinzu kommt, weil das Abschneiden von außen nach innen vorgenommen wird, werden sich die Flachrohrenden leicht konisch nach innen verformen, wodurch das erwähnte Einstecken in die Öffnungen ebenfalls erleichtert wird.
Vergleichbare Vorteile werden dadurch erreicht, dass die Wand des Flachrohrs als Platine bereitgestellt wird, dass die Platine zum Flachrohr umgeformt und die Naht hergestellt wird, dass an wenigstens einem Flachrohrende die Schmalseiten bis zu einer geringen Tiefe - einige Millimeter können bereits ausreichen - ausgeschnitten werden, dass wenigstens Teile der Breitseiten als Vorsprünge stehen bleiben, die abgebogen werden, dass die Inneneinsätze in das Flachrohr eingefügt und die Vorsprünge danach abgeschnitten werden. Diese nicht bevorzugte Variante des Verfahrens unterscheidet sich von der bevorzugten Variante dadurch, dass die Vorsprünge nicht bereits in der Platine hergestellt werden sondern erst durch das Ausschneiden der Schmalseiten - zeitlich nach der Herstellung des Flachrohres aber vor dem Einführen des Inneneinsatzes - geschaffen werden.
Ein weiterer wesentlicher Vorteil des vorgeschlagenen Verfahrens besteht darin, dass die erforderlichen Investitionen deutlich niedriger liegen als beispielsweise diejenigen für eine Walzenstraße zur endlosen Flachrohrherstellung. Somit stellt das vorgeschlagene Verfahren eine hervorragende Alternative zum Stand der Technik dar.
Das Flachrohr für Wärmetauscher mit Breit - und Schmalseiten und einem Inneneinsatz, deren Wand aus einer ausgestanzten Platine herstellbar ist, wobei das Flachrohr eine Einführschräge besitzt, um das Einführen des Inneneinsatzes zu erleichtern, ist dadurch gekennzeichnet, dass die Einführschräge aus wenigstens zwei abgebogenen Vorsprüngen am Ende des Flachrohrs besteht, die sich über Abschnitte der Breitseiten und / oder Schmalseiten des Flachrohrs erstrecken.
Es hat sich herausgestellt, dass wegen der vorschlagsgemäß als Vorsprünge ausgebildeten Einführschrägen, das Einführen der Inneneinsätze mit hoher Qualität möglich wird. Die Rohrwand liegt nach dem Einführen satt am Inneneinsatz an.
Eine Blechumformanlagezur Durchführung einiger Schritte des Verfahrens unterscheidet sich vom Stand der Technik insbesondere dadurch, dass sie eine Vorrichtung zum Abbiegen der Vorsprünge enthält.
Weitere Merkmale ergeben sich aus den anderen abhängigen Patentansprüchen, auf die hiermit verwiesen wird. Zudem ergeben sich diese Merkmale und deren Vorteile aus der folgenden Beschreibung von Ausführungsbeispielen anhand der beigefügten Zeichnungen.
Die Fig. 1 zeigt den Herstellungsablauf für Flachrohre (Prinzip).
Die Fig. 2 zeigt das Schweißen des Flachrohrs (Prinzip).
Die Fig. 3 und 4 zeigen prinzipiell das Einfügen von Inneneinsätzen in Flachrohre.
Die Fig. 5 zeigt einen Längsschnitt durch ein Flachrohrende und die Fig. 6 zeigt eine skizzierte Ansicht auf ein Flachrohrende.
Die Fig. 7 zeigt ein Flachrohrende im Zuge des Abtrennens der Vorsprünge.
Die Fig. 8 zeigt einen Ausschnitt aus einem Wärmetauscher.
Die Fig. 9 zeigt eine Draufsicht auf ein Flachrohr.

Die im Folgenden in den Ausführungsbeispielen beschriebenen Flachrohre 1 mit Inneneinsätzen **2** sind für Abgaswärmetauscher gedacht. Deshalb handelt es sich bei den Flachrohren **1** und bei den Inneneinsätzen **2** um solche aus Edelstahlblechen. Da im Zuge des Herstellungsprozesses für den Abgaswärmetauscher ein Lötverfahren vorgesehen ist, in dem auch die Inneneinsätze **2** in den Flachrohren **1** eingelötet werden sollen, wird auch beschrieben, wie Lotfolien **30** in das Flachrohr **1,** und zwar zwischen dem Inneneinsatz **2** und der Innenseite der Flachrohrwand, eingebracht werden. Bekanntlich ist die Lotbeschichtung bei Edelstahlblechen gegenwärtig noch nicht gelöst oder zumindest schwierig.

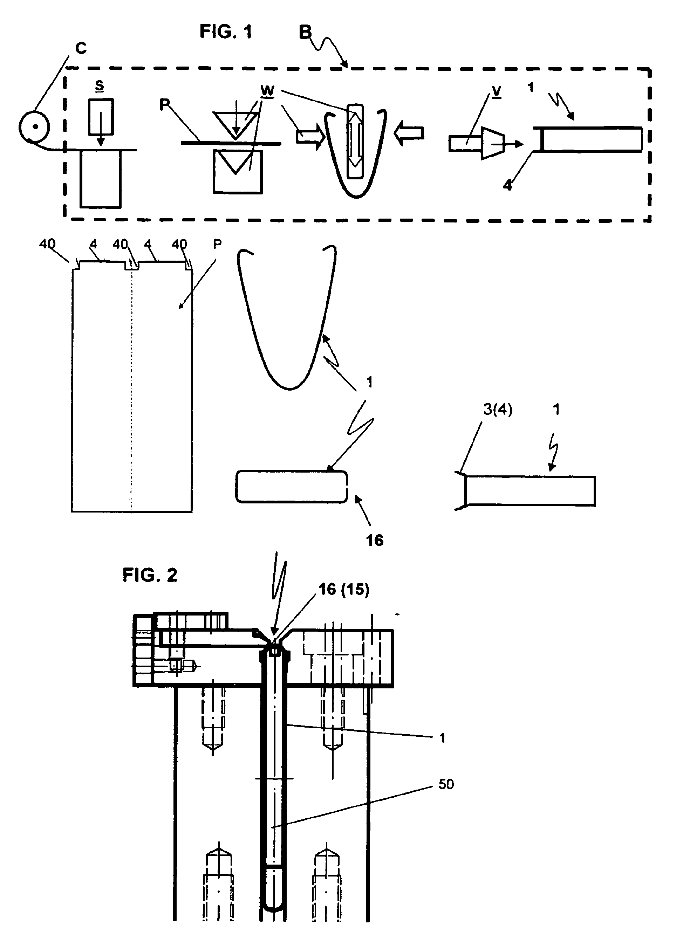

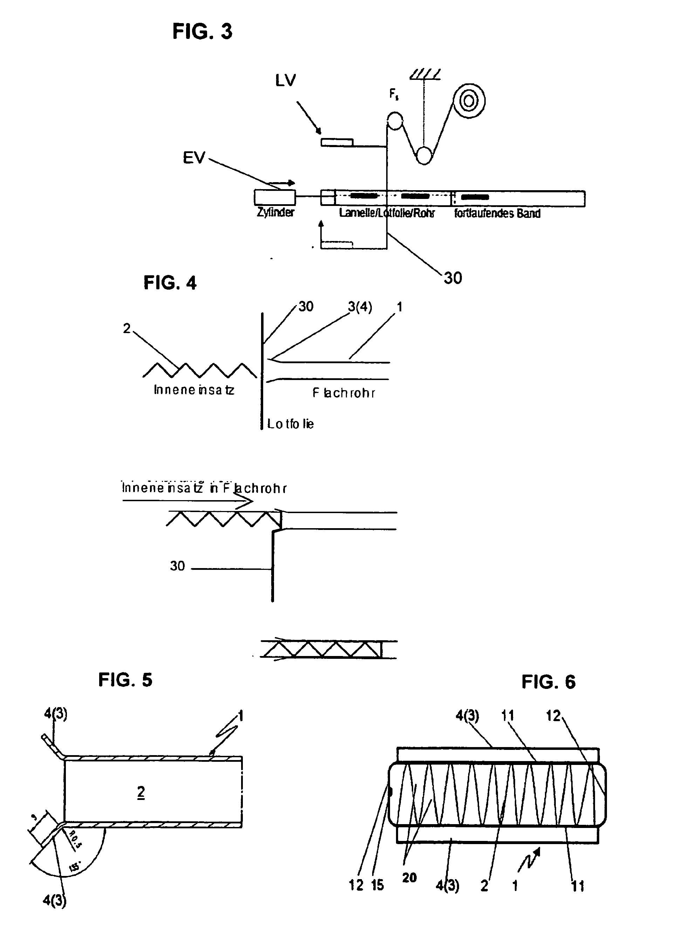

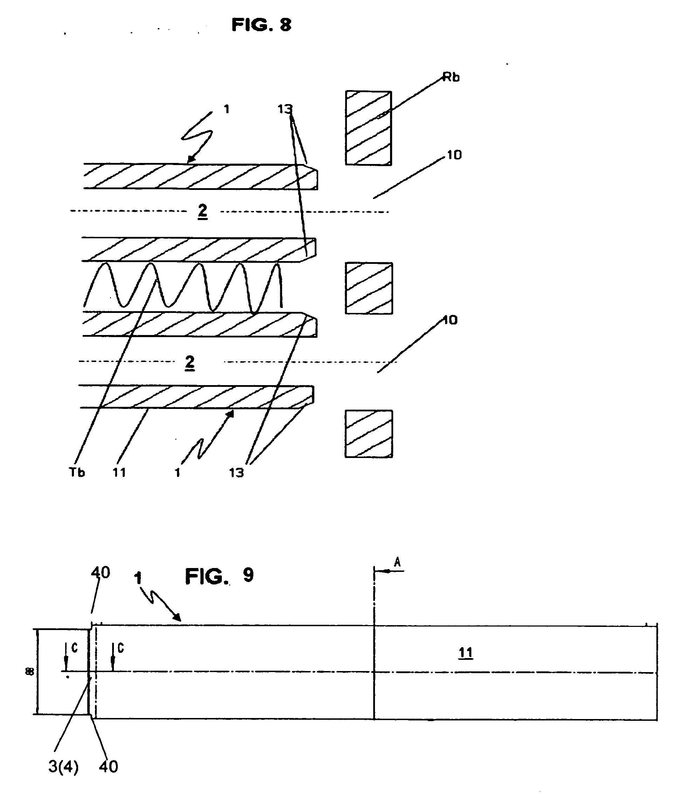

Bei Aluminiumblechen, die sich - in verschiedenen Legierungszusammensetzungen - zur Herstellung anderer Wärmetauscher im Automobilbereich als Standardwerkstoff durchgesetzt haben, ist die Lotbeschichtung der Bleche üblich, weshalb dort Lotfolien nicht nötig sind. Der vorliegende Vorschlag umfasst auch Ausführungen bei denen Lotfolien nicht notwendig sind, weil eine Lotbeschichtung vorhanden ist.
Der Ausgangsblechstreifen liegt als endloses Band aus Edelstahlblech vor. Von diesem Coil C wird taktweise ein benötigtes Stück Blech abgezogen und einer Stanze **S** zugeführt. Die in dem Stanzwerkzeug hergestellte Platine **P** stellt die Rohrwand des späteren Flachrohres dar. Im bevorzugten Fall (Fig. 1) weist die Platine **P** an einem Ende zwei Vorsprünge **4** auf. Dieses eine Ende ist auch das spätere eine Ende des Flachrohrs **1.** Am anderen Ende der Platine **P** bzw. des Flachrohrs sind solche Vorsprünge **4** nicht unbedingt erforderlich. Sie würden jedenfalls Mehraufwand bedeuten. Die zwei Vorsprünge **4** erstrecken sich im gezeigten Fall etwa über beide Breitseiten 11. Die drei Ausschnitte **40** liegen demnach etwa in den späteren Schmalseiten **12** des Flachrohrs **1.** Das kann aus der Fig. 9 gesehen werden, die eine Draufsicht auf ein Flachrohr **1** zeigt. Es könnten auch mehr als zwei Vorsprünge **4** mit entsprechend mehreren Ausschnitten **40** vorgesehen werden. Die Platine **P** verlässt das Stanzwerkzeug und kann einer weiteren Vorrichtung zugeführt werden, in der die Flachrohrform hergestellt wird. Das Flachrohr 1 wird mit einem minimierten Schweißspalt **16** in einer Schmalseite **12** hergestellt. Im Anschluss daran können die Vorsprünge **4** mittels eines Biegewerkzeuges abgebogen werden. Der Biegewinkel kann so ungefähr bei 35 - 45° liegen. (Fig. 5) Das Flachrohr mit den abgebogenen Vorsprüngen **4** wird zu einer weiteren Vorrichtung transportiert.
Bei einer bevorzugten Ausführung ist die vorstehend erwähnte Stanze **S** oder Presse zu einer komplexeren Blechumformanlage **B** (in Fig. 1 eingerahmt) ausgebaut worden, aus der die umgeformten Flachrohre 1 mit den abgebogenen Vorsprüngen **4** taktweise herauslaufen. Die Blechumformanlage **B** enthält wenigstens ein Werkzeug **W** zur Herstellung der Flachrohrform aus der Platine **P.** Also in der bevorzugten Ausführung erfolgt das Abbiegen der Vorsprünge **4** bereits im Zuge der Herstellung der Flachrohrform, das heißt, vor dem Schweißen der Längsnaht. Solche komplexen Blechumformanlagen sind an sich bekannt, das heißt, ausgenommen die darin integrierte Vorrichtung V zum Umbiegen der Vorsprünge **4.** Beim Umbiegen der Vorsprünge **4** kann das Flachrohr **1** noch im Werkzeug **W** eingespannt sein. In diesem Zustand fährt die Vorrichtung **V** an ein Ende des Flachrohres 1 heran und führt den Biegevorgang aus. Der jeweils erreichte Bearbeitungszustand des Flachrohrs wurde in der Fig. **1** unterhalb der Stationen **S, W** und V skizziert.
In diesem Fall wird im Anschluss daran das Flachrohr **1** zu einer Schweißstation transportiert. (Fig. 2) Eine Schweißunterlage **50** wird in das Flachrohr **1** eingeführt und in einer der Schmalseiten **12** des Flachrohrs 1 wird eine Schweißnaht **15** in Längsrichtung des Flachrohres 1 ausgeführt. Es kann sich um eine mit einem Laser geschweißte Naht handeln. Dabei wird das Flachrohr zwischen Spannbacken gehalten.
Auf einer zweiten Transportstrecke werden Inneneinsätze **2,** ebenfalls von einem endlosen Band stammend, entsprechend umgeformt, das heißt mit einer Wellenstruktur versehen, auf Länge zugeschnitten und an eine weitere Vorrichtung herangeführt. Mittels dieser Vorrichtung **EV** wird in jedes Flachrohr **1** ein Inneneinsatz **2** eingeschoben. Das Flachrohr **1** wird dazu so orientiert, dass es mit seinen abgebogenen Vorsprüngen **4,** die als Einführschrägen **3** dienen, in Richtung auf einen ankommenden Inneneinsatz **2** zu liegen kommt. Der Inneneinsatz **2** wird an das Ende des Flachrohres **1** herangeführt und in das Flachrohr **1** hinein geschoben. Eine Ansicht auf ein Flachrohrende, die den jetzt erreichten Zustand zeigt, befindet sich in der Fig. 6.
Wie einleitend zu diesem Abschnitt bereits ausgeführt wurde, handelt es sich im gezeigten Ausführungsbeispiel allerdings um Flachrohre **1** und Inneneinsätze **2** aus Edelstahl. Deshalb steht mit der weiteren Vorrichtung, also mit der EinschiebeVorrichtung **EV,** noch eine Lotfolien-Vorrichtung **LV** in Wirkverbindung. Mittels der Lotfolien-Vorrichtung **LV** wird ein Stück Lotfolie **30** benötigter Länge von einem endlosen Lotfolienband abgetrennt und vor dem Einschieben des Inneneinsatzes **2** an denselben herangebracht, sodass die Lotfolie **30** oben und unten am Inneneinsatz **2** anliegt. Erst dann erfolgt das Einschieben des Inneneinsatzes **2** samt Lotfolie **30.** (Fig. 3 und 4) Die drei Darstellungen in der Fig. **4** deuten (von oben nach unten) an, wie die Lotfolie **30** vor den Inneneinsatz **2** gebracht wird, um diesen herum gelegt wird und wie schließlich die Lotfolie **30** mit dem Inneneinsatz **2** in das Flachrohr **1** geschoben wird. Der gewellte Inneneinsatz **2** kann in Längsrichtung des Flachrohres **1** laufende geschlängelte Kanäle **20** aufweisen, was die skizzierte Darstellung des Inneneinsatzes **2** in der Fig. 4 erklären soll. Die Fig. 5 und 6 zeigen den jetzt erreichten Zustand.

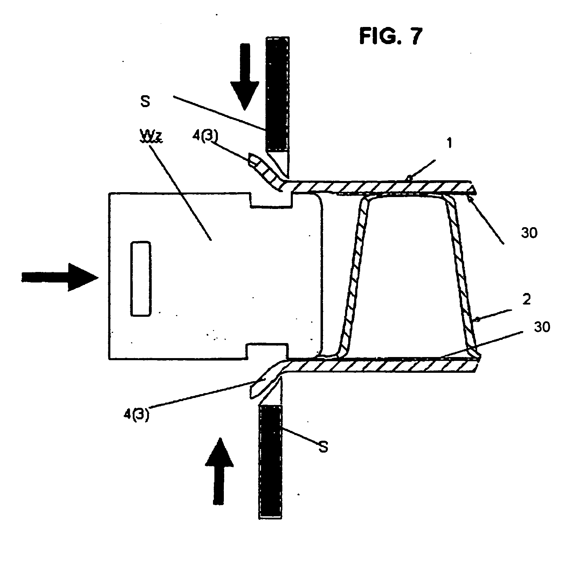

Im Anschluss daran werden die einzelnen Flachrohre **1** mit den darin angeordneten Inneneinsätzen **2** zu einer Abtrennvorrichtung transportiert, in der die abgebogenen zwei Vorsprünge **4** entfernt werden. Wie die Fig. 7 beispielsweise zeigt, wird dazu ein Werkzeug Wz in das Flachrohrende eingeführt um es abzustützen und im Anschluss daran werden die zwei Vorsprünge **4** mittels Schneidemesser **S,** die von außen angreifen, abgeschnitten.
Danach werden die mit Inneneinsätzen **2** ausgestatteten Flachrohre 1 im Wechsel mit Turbulenzblechen **Tb** gestapelt. An den Enden der Flachrohre werden Rohrböden angesetzt. Das nun entstandene Kühlnetz kann in einem Lötofen unter Vakuum gelötet werden, wozu das Kühlnetz mit einer Anpresskraft flächig belastet wird. Die Fig. **8** zeigt einen kleinen Ausschnitt aus einem Wärmetauscher bestehend aus lediglich zwei Flachrohrenden und einem Rohrboden **Rb** mit Öffnungen **10,** in die die Flachrohrenden einzusetzen sind. Es ist daraus ersichtlich, dass durch das Abtrennen der abgebogenen Vorsprünge **4** eine außen liegende Fase **13** ausgebildet wurde, die das Einschieben der Flachrohrenden in die Öffnungen **10** etwas erleichtert. Notwendige Vorbehandlungen bezüglich Löten, beispielsweise Entfetten usw. werden nicht beschrieben, weil dazu die Kenntnisse des Fachmannes vorausgesetzt werden können.
Um das gelötete Kühlnetz kann nun ein Gehäuse angeordnet werden. Dieses kann an den Rändern der Rohrböden verschweißt werden. Ferner können Sammelkästen an die Rohrböden angesetzt und ebenfalls angeschweißt werden. Sammelkästen aus Kunststoff, die mit den Rändern des Rohrbodens mechanisch verbunden werden, sind in Abhängigkeit von den vorliegenden Temperaturen ebenfalls möglich. Bestehen auch die Sammelkästen aus Metall kann es allerdings günstiger sein, das Gehäuse und die Sammelkästen bereits vor dem Löten des Kühlnetzes an dasselbe anzubringen und erst danach den gesamten Wärmetauscher im Lötofen zu löten. Da das Gehäuse nicht in Kontakt mit den aggressiven Abgasen steht, kann es beispielsweise aus Aluminium oder aus ferritischem Stahl hergestellt sein.
Eine machbare aber nicht gezeigte weil nicht bevorzugte Variante der Flachrohrherstellung besteht darin, die Platine **P** ohne die erwähnten Vorsprünge **4** auszustanzen. Nach dem oben beschriebenen Schweißen des Flachrohres werden dann an einem Ende des Flachrohres **1** dessen beide Schmalseiten **12** etwa 4 mm tief bzw. weit ausgeschnitten. Im Anschluss daran werden die Breitseiten **11** etwa auf 45° nach außen abgebogen. Es scheint klar zu sein, dass das Ausschneiden und das Abbiegen auch mittels eines gemeinsamen Werkzeugs in einem Arbeitsgang ausgeführt werden kann. Bei einer derzeitig als nicht so günstig angesehenen Alternative schneidet man die Breitseiten aus und biegt die Schmalseiten nach außen um. Die sich anschließenden Operationen decken sich mit denjenigen, die vorstehend bereits beschrieben wurden.

## Patentansprüche

1. Verfahren zur Herstellung von Flachrohren (1) mit Inneneinsätzen (2) für Wärmetauscher, wobei die Wand eines jeden Flachrohrs als Platine (P) aus einem Blechstreifen hergestellt, zum Schmal - und Breitseiten (11, 12) aufweisenden Flachrohr umgeformt und in einer Naht (15) verbunden wird,
**dadurch gekennzeichnet, dass** Ausschnitte (40) erzeugt werden, die zu wenigstens zwei Vorsprüngen (4) am Ende des Flachrohrs führen und dass die Vorsprünge (4) nach außen abgebogen werden, sodass Einführschrägen (3) zum Einschieben des Inneneinsatzes (2) in jedes Flachrohr (1) bereitgestellt werden, wobei die abgebogenen Vorsprünge (4) nach dem Einfügen des Inneneinsatzes (2) abgetrennt werden.

2. Verfahren nach Anspruch 1, **dadurch gekennzeichnet, dass** die Erzeugung der Vorsprünge (4) **dadurch** erfolgt, dass die Platine (P) mit wenigstens drei Ausschnitten (40) ausgestanzt wird und dass die Platine (P) derart zum Flachrohr umgeformt wird, dass die Vorsprünge (4) wenigstens Teile der Breitseiten (11) oder Schmalseiten (12) bilden.

3. Verfahren nach Anspruch 1, **dadurch gekennzeichnet, dass** die Erzeugung der Vorsprünge (4) **dadurch** erfolgt, dass die Schmalseiten eines jeden Flachrohrs (1) mit je einem Ausschnitt (40) versehen werden.

4. Verfahren nach einem der Ansprüche 1 bis 3, **dadurch gekennzeichnet, dass** eine Schweißunterlage in das Flachrohr (1) eingeführt und die Schweißnaht (15) von außen in einer der Schmalseiten (12) ausgeführt wird.

5. Verfahren nach einem der Ansprüche 1 bis 4, **dadurch gekennzeichnet, dass** das Abbiegen der Vorsprünge (4) mittels eines Werkzeuges (V) nach der Herstellung der Flachrohrform erfolgt.

6. Verfahren nach einem der Ansprüche 1 bis 5, **dadurch gekennzeichnet, dass** eine Lotfolie (30) um den Inneneinsatz (2) gelegt wird und der Inneneinsatz (2) mit der Lotfolie (30) in das Flachrohr eingeschoben wird.

7. Verfahren nach einem der Ansprüche 1 bis 6, **dadurch gekennzeichnet, dass** zum Beseitigen der Vorsprünge (4) ein Unterwerkzeug (Wz) in das Flachrohrende eingeführt wird und ein von außen angreifendes Schnittmesser (S) die Vorsprünge (4) abschneidet.

## Claims

1. Method for producing flat tubes (1) with inner inserts (2) for heat exchangers, the wall of each flat tube being produced as a blank (P) from a sheet metal strip, reshaped into the flat tube having narrow and wide sides (11, 12) and connected in a seam (15), **characterized in that** cutouts (40) are generated which lead to at least two projections (4) at the end of the flat tube and **in that** the projections (4) are bent down outwards, so that introduction bevels (3) are provided for inserting the inner insert (2) into each flat tube (1), the bent-down projections (4) being separated off after the insertion of the inner insert (2).

2. Method according to Claim 1, **characterized in that** the projections (4) are generated **in that** the blank (P) is punched out with at least three cutouts (40) and **in that** the blank (P) is reshaped into the flat tube in such a way that the projections (4) form at least parts of the wide sides (11) or narrow sides (12).

3. Method according to Claim 1, **characterized in that** the projections (4) are generated **in that** the narrow sides of each flat tube (1) are each provided with a cutout (40).

4. Method according to one of Claims 1 to 3, **characterized in that** a weld backing is introduced into the flat tube (1) and the weld seam (15) is formed from the outside in one of the narrow sides (12).

5. Method according to one of Claims 1 to 4, **characterized in that** the projections (4) are bent down by means of a tool (V) after the production of the flat tube shape.

6. Method according to one of Claims 1 to 5, **characterized in that** a solder foil (30) is placed around the inner insert (2) and the inner insert (2) is inserted with the solder foil (30) into the flat tube.

7. Method according to one of Claims 1 to 6, **characterized in that**, for eliminating the projections (4), a lower tool (Wz) is introduced into the flat tube end and an externally acting cutting blade (S) cuts off the projections (4).

## Revendications

1. Procédé de fabrication de tubes plats (1) comprenant des inserts internes (2) pour échangeur de chaleur, la paroi de chaque tube plat étant fabriquée sous forme de platine (P) à partir d'un ruban de tôle, étant façonnée pour donner un tube plat présentant des côtés étroits et larges (11, 12), et étant connectée au niveau d'un joint (15), **caractérisé en ce que** des sections (40) sont produites, lesquelles conduisent à au moins deux saillies (4) à l'extrémité du tube plat et **en ce que** les saillies (4) sont recourbées vers l'extérieur, de sorte que des biseaux d'insertion (3) soient fournis pour l'insertion de l'insert interne (2) dans chaque tube plat (1), les saillies recourbées (4) étant séparées après l'insertion de l'insert interne (2).

2. Procédé selon la revendication 1, **caractérisé en ce que** la production des saillies (4) a lieu par le fait que la platine (P) est estampée avec au moins trois sections (40) et **en ce que** la platine (P) est façonnée pour donner un tube plat de telle sorte que les saillies (4) forment au moins des parties des côtés larges (11) ou des côtés étroits (12).

3. Procédé selon la revendication 1, **caractérisé en ce que** la production des saillies (4) a lieu par le fait que les côtés étroits de chaque tube plat (1) sont pourvus d'une section respective (40).

4. Procédé selon l'une quelconque des revendications 1 à 3, **caractérisé en ce qu'**un support de soudage est introduit dans le tube plat (1) et le cordon de soudure (15) est réalisé depuis l'extérieur dans l'un des côtés étroits (12).

5. Procédé selon l'une quelconque des revendications 1 à 4, **caractérisé en ce que** la courbure des saillies (4) a lieu au moyen d'un outil (V) après la fabrication de la forme de tube plat.

6. Procédé selon l'une quelconque des revendications 1 à 5, **caractérisé en ce qu'**un film de brasure (30) est placé autour de l'insert interne (2) et l'insert interne (2) est introduit avec le film de brasure (30) dans le tube plat.

7. Procédé selon l'une quelconque des revendications 1 à 6, **caractérisé en ce que** pour éliminer les saillies (4), un outil inférieur (Wz) est introduit dans l'extrémité du tube plat et un couteau de découpage (S) agissant depuis l'extérieur coupe les saillies (4).
